# EUROPEAN PATENT SPECIFICATION

(11) **EP 4 303 683 B1**
(45) Date of publication and mention of the grant of the patent: **15.04.2026**
(21) Application number: 23182413.7
(22) Date of filing: 29.06.2023
(51) Int. Cl.: G05D 1/00, H04W 4/44, B60W 50/14, G08G 1/01, G08G 1/0967

(54) **VEHICLE INFORMATION PROCESSING SYSTEM, VEHICLE INFORMATION PROCESSING METHOD, AND NON-TRANSITORY STORAGE MEDIUM**
FAHRZEUGINFORMATIONSVERARBEITUNGSSYSTEM, FAHRZEUGINFORMATIONSVERARBEITUNGSVERFAHREN UND NICHTTRANSITORISCHES SPEICHERMEDIUM
SYSTÈME DE TRAITEMENT D'INFORMATIONS DE VÉHICULE, PROCÉDÉ DE TRAITEMENT D'INFORMATIONS DE VÉHICULE ET SUPPORT D'INFORMATIONS NON TRANSITOIRE

(30) Priority: 08.07.2022 JP 2022110145
(43) Date of publication of application: 10.01.2024
(73) Proprietor: TOYOTA JIDOSHA KABUSHIKI KAISHA, Toyota-shi, Aichi-ken, 471 8571 (JP)
(72) Inventor: MAKI, Hiroki, TOYOTA-SHI, AICHI-KEN, 471-8571 (JP); KURIYAMA, Kanade, TOYOTA-SHI, AICHI-KEN, 471-8571 (JP); YOSHIDA, Kaoru, TOYOTA-SHI, AICHI-KEN, 471-8571 (JP); OKUDA, Masataka, TOYOTA-SHI, AICHI-KEN, 471-8571 (JP); KAKUTANI, Masatoshi, TOYOTA-SHI, AICHI-KEN, 471-8571 (JP); WATANABE, Kosuke, TOYOTA-SHI, AICHI-KEN, 471-8571 (JP)
(74) Representative: Cabinet Beau de Loménie

(56) References cited:
- WO-A1-2019/180700
- US-A1- 2006 293 819
- US-A1- 2021 237 748
- BUCKLAND LUCAS ET AL: "Complementing Autonomous Driving with Teleoperation: Methodology, Challenges and Best Practices", 1 July 2020 (2020-07-01), XP093094370, Retrieved from the Internet <URL:https://www.visteon.com/wp-content/uploads/2020/07/visteon-white-paper-complementing-autonomous-driving-with-teleoperation-methedology-challenges-best-practices.pdf> [retrieved on 20231024]

## Description

### BACKGROUND OF THE INVENTION

### 1. Field of the Invention

The present invention relates to a vehicle information processing system, a vehicle information processing method, and a non-transitory storage medium.

### 2. Description of Related Art

Japanese Unexamined Patent Application Publication (Translation of PCT Application) No. 2019-505059 (JP 2019-505059 A) discloses an autonomous vehicle service platform that is communicatively connected, via a network, to a plurality of autonomous vehicles capable of autonomous driving and provides services to users by remotely operating the autonomous vehicles. As an example of such services, this autonomous vehicle service platform dispatches one of the autonomous vehicles to a current location of a user who requests autonomous transportation, and transports the user to a destination by autonomous driving. In this platform, a teleoperator can remotely control the autonomous vehicle and provide a course of action to appropriately negotiate an obstacle on a road.

Document Buckland Lucas ET AL: "Complementing Autonomous Driving with Teleoperation: Methodology, Challenges and Best Practices", 1 July 2020 (2020-07-01), XP093094370, relates to autonomous driving with teleoperation.

Document WO 2019/180700 A1 relates to a system and method of remote driving and/or tele-operation of a vehicle or of an autonomous vehicle.

Document US 2006/293819 A1 relates to a driving support apparatus and to a driving support method.

### SUMMARY OF THE INVENTION

By controlling devices mounted on the vehicle via the network, it is possible to expand the range of services that can be provided by the vehicle as in JP 2019-505059 A. The services provided via the network include cloud services. The cloud services are provided to, for example, users' mobile terminals by operating applications on clouds. Such a technology may also be applicable to vehicles. For example, applications on a cloud can provide a service to an occupant by operating a navigation system that guides a user, or control the behavior of a vehicle by operating a motor that outputs a driving force for traveling. Mainly when the vehicle is traveling, the surrounding conditions are constantly changing. Therefore, the vehicle may need an application that operates on-board devices to handle the changes. As a result, depending on the type of application, the devices to be controlled by the application operating on the vehicle and the application operating via the network may overlap each other. In this case, there is a possibility that an application appropriate for the current vehicle condition cannot operate.

The present invention provides a vehicle information processing system, a vehicle information processing method, and a non-transitory storage medium that are capable of selecting and exerting the function of a predetermined application or its output among a plurality of applications that operates on a vehicle or a cloud and operates on-board devices.

A vehicle information processing system according to a first aspect of the present invention is defined in accordance with claim 1. Any examples and embodiments of the description not falling within the scope of the claims do not form part of the invention as defined by the independent claims.

The vehicle information processing system according to the first aspect of the present invention may include a second external information processing device including a predetermined application configured to output a control command to at least one of the control target devices. The second external information processing device may be provided outside the vehicle and the first external information processing device. The first external information processing device may include a reception unit configured to receive control information including the control command of the predetermined application. The arbitration unit may be configured to arbitrate the control commands configured to be output by the vehicle control applications and the control information received by the reception unit.

In the vehicle information processing system according to the first aspect of the present invention, the second arbitration unit may include a plurality of arbitration processing units associated with types of the control commands. The arbitration unit may be configured to arbitrate the control commands based on a predetermined type of priority levels when the control target devices to be subjected to the control commands overlap each other, the control commands being arbitrated by the arbitration processing units.

In the vehicle information processing system according to the first aspect of the present invention, the second arbitration unit may include a guidance control arbitration unit configured to arbitrate guidance control commands for guiding the vehicle, an alert control arbitration unit configured to arbitrate alert control commands for issuing alert, and a travel control arbitration unit configured to arbitrate travel control commands for causing the vehicle to travel. The alert is related to driving of the vehicle. The type of priority levels may include a highest priority level for the travel control commands, a second highest priority level for the alert control commands, and a third highest priority level for the guidance control commands.

In the vehicle information processing system according to the first aspect of the present invention, the second arbitration unit may be configured to, when a plurality of the control commands is present, determine whether a control command with high urgency related to safety of the vehicle is present among the control commands. The type of priority levels may include giving a highest priority level to the control command obtained by the vehicle control application installed in the vehicle when a request of the control commands with the high urgency related to the safety of the vehicle is present among the control commands.

In the vehicle information processing system according to the first aspect of the present invention, the type of priority levels may include priority levels determined such that a higher priority level is given to the control command that is output based on latest data among a plurality of the control commands.

In the vehicle information processing system according to the first aspect of the present invention, the vehicle control applications may include an application configured to process information about the vehicle. The information about the vehicle may be transmitted from the vehicle information processing device. The vehicle control applications may be installed in the first external information processing device. The information about the vehicle may include user information including information about a driving tendency of a user in the vehicle, and vehicle information including information about a current position and a vehicle speed of the vehicle.

In the vehicle information processing system according to the first aspect of the present invention, the first external information processing device may be configured to construct, in a virtual space, a digital twin synchronized in time with a real world. The digital twin may be constructed based on the user information and the vehicle information. The first arbitration unit may be configured to perform arbitration based on information obtained by the digital twin.

A vehicle information processing method according to a second aspect of the present invention for processing information for controlling a vehicle by a vehicle information processing device mounted on the vehicle and an external information processing device outside the vehicle includes, when (i) a plurality of control command signals is obtained by vehicle control applications of the vehicle information processing device or the external information processing device and (ii) the control command signals overlap each other for a predetermined control target device of the vehicle, arbitrating, by the vehicle information processing device or the external information processing device, the vehicle control applications or the control command signals to determine one control command signal for the predetermined control target device, and outputting the one control command signal to the control target device.

A non-transitory storage medium according to a third aspect of the present invention stores instructions that are executable by one or more processors in a computer and that cause the one or more processors to perform functions. The functions include, when (i) a plurality of control command signals is obtained by vehicle control applications of a vehicle information processing device or an external information processing device and (ii) the control command signals overlap each other for a predetermined control target device of a vehicle, arbitrating, by the vehicle information processing device or the external information processing device, the vehicle control applications or the control command signals to determine one control command signal for the predetermined control target device, and outputting the one control command signal to the control target device. The vehicle information processing device is mounted on the vehicle, and the external information processing device is provided outside the vehicle.

In the vehicle information processing system of the present invention, the arbitration unit that arbitrates the vehicle control applications can select and exert the function of a predetermined application or its output regardless of whether the vehicle control applications are inside or outside the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram showing an example of a vehicle information processing system according to an embodiment of the present invention;
FIG. 2 is a block diagram schematically showing a vehicle information processing device, a first external information processing device, and a second external information processing device that constitute the vehicle information processing system;
FIG. 3 is a functional block diagram of the vehicle information processing device, the first external information processing device, and the second external information processing device that constitute the vehicle information processing system;
FIG. 4 is a diagram showing a part of the functional block diagram of the vehicle information processing device, and is a functional block diagram in a case where applications in different categories make outputs to the same control target device;
FIG. 5 is a flowchart showing an example of control to be executed by a first external information processing device according to the embodiment of the present invention; and
FIG. 6 is a flowchart showing an example of control to be executed by the vehicle information processing device according to the embodiment of the present invention.

### DETAILED DESCRIPTION OF EMBODIMENTS

A vehicle information processing system of the present invention includes a vehicle information processing device and a first external information processing device provided outside a vehicle. Vehicle control applications are installed in at least one of them. The vehicle information processing system includes an arbitration unit configured to perform arbitration to determine one control command out of the control commands obtained by the vehicle control applications for a predetermined one of control target devices. Therefore, it is possible to control the vehicle not only by the application installed in the vehicle but also by the application installed in the information processing device outside the vehicle. The arbitration unit that arbitrates these applications can select and exert the function of a predetermined application or its output regardless of whether the applications are inside or outside the vehicle.

When the arbitration unit is in the first external information processing device, the control command determined through the arbitration is transmitted to the vehicle. Therefore, it is possible to reduce the amount of data communication between the first external information processing device and the vehicle information processing device. When an application for controlling the vehicle is installed in a second external information processing device other than the vehicle and the first external information processing device, a first arbitration unit of the first external information processing device performs arbitration including this application. Therefore, it is possible to suppress an increase in the amount of data communication. In this case, the arbitration unit need not be provided in the vehicle information processing device. When the arbitration unit is provided in the vehicle information processing device, arbitration is performed on the control command of the application received from the first external information processing device and the control command of the application in the vehicle information processing device. Therefore, it is possible to avoid an overlap between the control commands for the predetermined control target device even though the information processing devices are different. In this case, the arbitration unit need not be provided in the first external information processing device.

When the vehicle control applications and the arbitration units are provided in the vehicle information processing device and the first external information processing device outside the vehicle, the first arbitration unit of the first external information processing device arbitrates the control commands of the vehicle control applications, and the second arbitration unit of the vehicle information processing device arbitrates the control command determined through the arbitration and the control command of the vehicle control application installed in the vehicle. That is, the arbitration is performed in two stages. Therefore, the arbitration can be performed to determine a more appropriate application that outputs the control command.

The applications are categorized into guidance, alert, and travel in accordance with categories of the control commands. Therefore, it is possible to facilitate development of applications that operate the control target devices of the vehicle by a so-called third party such as the second external information processing device. The first arbitration unit and the second arbitration unit include a plurality of arbitration processing units associated with the categories, and have a first type of priority levels and a second type of priority levels including a plurality of priority levels associated with the categories. Specifically, when the same control target device is operated by outputting different types of control command signals, the highest priority is given to a control command of an application related to travel control, followed by a control command of an application related to alert control, and then a control command of an application related to guidance control. Therefore, the application having high urgency and importance for the vehicle or the user can be operated with priority. Thus, the timings and frequencies of acceleration, deceleration, and steering of the vehicle can be controlled appropriately and the user can comfortably ride the vehicle. When the control commands are output by a plurality of applications having high urgency and importance related to the safety of the vehicle, including the application installed in the vehicle, among the control commands of the plurality of applications, arbitration is performed to set the highest priority level to the output of the application installed in the vehicle. Regarding the danger of the vehicle, it is predicted that the data detected by the vehicle is the latest or accurate. By setting such priority levels, the safety of the vehicle and the user can further be increased. When a plurality of applications operates for the predetermined control target device within the same category, arbitration is performed to set a higher priority level to an application that makes an output based on the latest data. With such priority levels, it is possible to control the vehicle or guide the user constantly based on the latest information among the acquired pieces of information.

An embodiment of the present invention will be described with reference to the drawings. The following embodiment is merely an example in which the present invention is embodied, and does not limit the present invention.

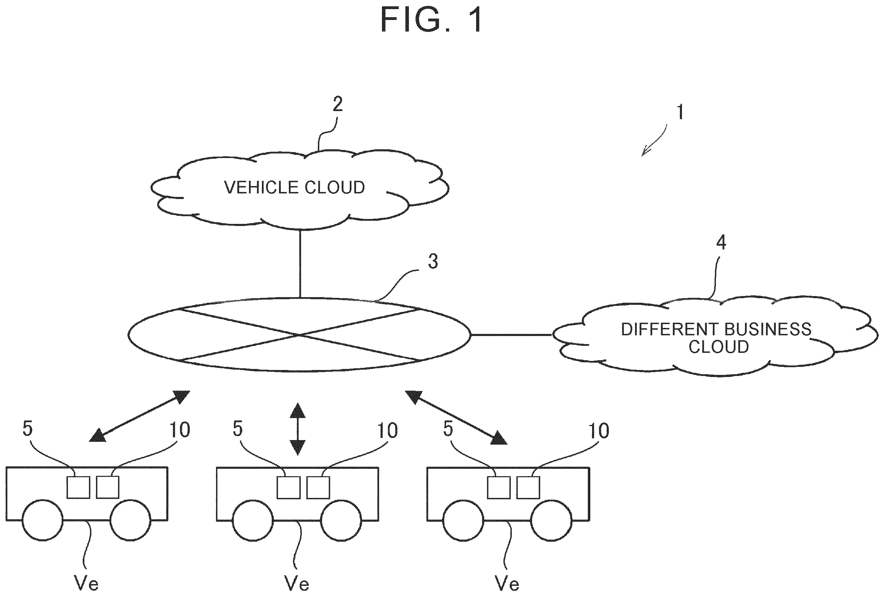

FIG. 1 shows an overall configuration of a vehicle information processing system 1 according to the embodiment of the present invention. As shown in FIG. 1, the vehicle information processing system 1 includes vehicles Ve, a vehicle cloud 2, a network 3, and a different business cloud 4. That is, the vehicles Ve, the vehicle cloud 2, and the different business cloud 4 are communicatively connected to each other via the network 3. The network 3 may be a hitherto known communication network typified by a public communication network such as the Internet, a data communication module (DCM), a telephone communication network for mobile phones and the like, a wireless communication network, or other communication networks and the like. The vehicle Ve may be a general existing vehicle such as an engine vehicle, a battery electric vehicle, a hydrogen vehicle, a hybrid electric vehicle, or a fuel cell electric vehicle. The vehicle may be not only a manual driving vehicle that travels to a destination by driving operation of a driver, but also an autonomous driving vehicle that travels to a destination by autonomously controlling driving operation without depending on driving operation of a driver.

The vehicle Ve includes control target devices (hereinafter sometimes referred to as "actuators") 5 and a vehicle information processing device 10. The control target devices 5 are a part of on-board devices and controlled by the vehicle information processing device 10. Examples of the control target devices 5 include a car navigation system that guides a user, a buzzer that outputs alert sound for notifying the user about danger, an instrument panel that displays alert, a motor that outputs a driving force of the vehicle Ve, and a brake that outputs a braking force of the vehicle Ve.

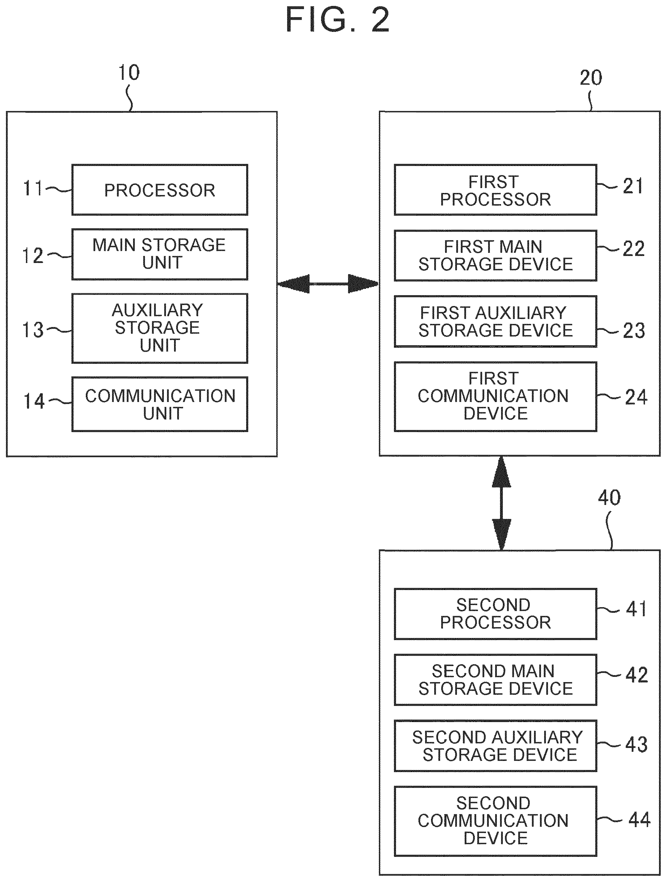

As shown in FIG. 2, the vehicle information processing device 10 is configured to transmit data to and receive data from the vehicle cloud 2. The vehicle information processing device 10 includes a processor 11, a main storage unit 12, an auxiliary storage unit 13, a communication unit 14, and the like as main components. In the vehicle information processing device 10 according to the embodiment of the present invention, the processor 11 loads a program stored in a recording medium into a work area of the main storage unit 12 and executes it, and performs various types of control through the execution of the program, thereby performing a function that meets a predetermined purpose.

The processor 11 is, for example, a central processing unit (CPU) or a digital signal processor (DSP). The processor 11 controls the vehicle information processing device 10 and performs various types of information processing calculation.

The main storage unit 12 includes, for example, a random access memory (RAM) and a read only memory (ROM). As described above, the work area where the processor 11 executes the program is set in the main storage unit 12.

The auxiliary storage unit 13 is an example of a memory in the embodiment of the present invention, and includes, for example, an erasable programmable ROM (EPROM) or a hard disk drive (HDD). The auxiliary storage unit 13 may include a so-called removable medium that is a portable recording medium. The removable medium may be, for example, a universal serial bus (USB) memory or a disc recording medium such as a compact disc (CD) or a digital versatile disc (DVD). The auxiliary storage unit 13 stores various programs, various types of data, and various tables in the recording medium by reading and writing them. That is, the auxiliary storage unit 13 stores applications 17 described later for controlling the control target devices 5 of the vehicle Ve, and also stores data for generating a digital twin described later. The auxiliary storage unit 13 may store an operating system (OS). A part or all of the above information may be stored in the main storage unit 12. The information stored in the main storage unit 12 may be stored in the auxiliary storage unit 13.

The communication unit 14 is a wireless communication circuit that is always connected to the vehicle cloud 2, for example, by using wireless communication to perform data communication, and communicates data with clouds other than the vehicle cloud, facilities, or equipment. The wireless communication circuit performs communication by using mobile communication such as 5th Generation (5G) or Long Term Evolution (LTE). The wireless communication circuit may perform communication by using narrowband communication such as dedicated short range communications (DSRC). Alternatively, the wireless communication circuit may perform communication by using wireless communication such as Wi-Fi, or may perform communication by using short-range communication such as Bluetooth (registered trademark) Low Energy (BLE).

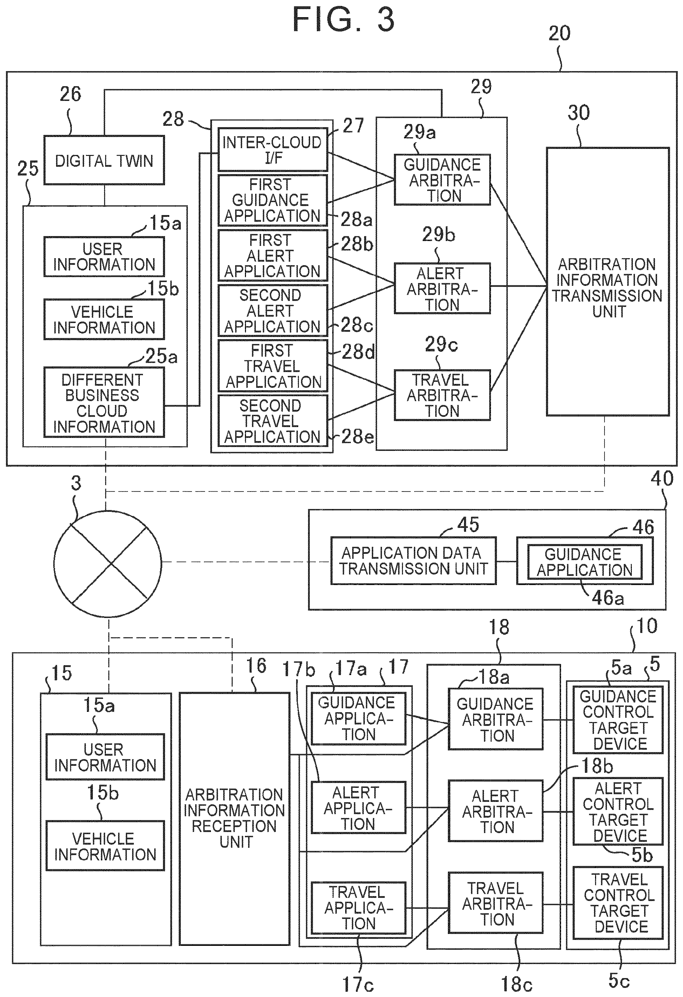

As shown in FIG. 3, the vehicle information processing device 10 configured as described above includes a data transmission unit 15, an arbitration information reception unit 16, vehicle-side applications 17, and a vehicle-side arbitration unit 18 at appropriate locations in the processor 11, the main storage unit 12, the auxiliary storage unit 13, and the communication unit 14.

The data transmission unit 15 transmits user information 15a and vehicle information 15b stored in the vehicle Ve to the vehicle cloud 2 via the network 3. The user information 15a is mainly information about users including a driver and passengers who use the vehicle Ve, and mainly includes a driving tendency such as timings and frequencies of acceleration, deceleration, and steering of the vehicle Ve, action patterns during driving, and the like. The vehicle information 15b is current position information and traveling speed (vehicle speed) of the vehicle Ve, or data obtained by detecting surrounding conditions by sensors mounted on the vehicle Ve. The user information 15a and the vehicle information 15b are transmitted to the vehicle cloud 2 as needed. In particular, the vehicle information 15b is transmitted with as little time lag as possible.

The arbitration information reception unit 16 receives information about an arbitration result transmitted from the vehicle cloud 2 via the network 3. Although details will be described later, when a plurality of vehicle cloud-side applications 28 and different business cloud-side applications 46 outputs control requests for operating predetermined control target devices 5, the vehicle cloud 2 selects cloud-side applications 28 and 46 that transmit control requests based on predetermined conditions from among the plurality of control requests. Therefore, the information about the arbitration result includes data such as control commands related to the cloud-side applications 28 and 46 selected by arbitration. The information about the arbitration result received from the vehicle cloud 2 by the arbitration information reception unit 16 is transmitted to the vehicle-side arbitration unit 18.

The vehicle-side applications 17 are examples of a vehicle control application in the embodiment of the present invention. A plurality of vehicle-side applications 17 is installed in the vehicle information processing device 10, and operates the control target devices 5 among the on-board devices as appropriate by transmitting or outputting control command signals. The vehicle-side applications 17 are not limited to operation on one control target device 5 by one vehicle-side application 17, and may include operation on one predetermined control target device 5 among the control target devices 5 by a plurality of vehicle-side applications 17. One vehicle-side application 17 may operate a plurality of control target devices 5.

The vehicle-side applications 17 include, for example, applications that operate the navigation system that guides a user to a destination, operate an alert device for notifying the user that there is an obstacle on a planned travel route of the vehicle Ve, and output a control command for controlling the brake and motor in response to obstacles or stopped vehicles on the planned travel route. In the embodiment of the present invention, such vehicle-side applications 17 are categorized by function. This categorization is set depending on the purposes of the applications, the control target devices 5 to be operated, and the like.

Specifically, the vehicle-side applications 17 are categorized into vehicle-side guidance applications 17a that mainly operate guidance control target devices 5a related to guidance for a user, vehicle-side alert applications 17b that mainly operate alert control target devices 5b related to alert for notifying the user about danger, and vehicle-side travel applications 17c that mainly operate travel control target devices 5c related to the behavior of the vehicle Ve. When requests overlap each other within the same category, for example, when a plurality of vehicle-side guidance applications 17a outputs control commands or requests to operate the same predetermined control target device 5, a vehicle-side guidance application 17a that actually outputs a control command to the control target device 5 is selected from among the vehicle-side guidance applications 17a. The applications that output requests to operate the control target devices 5 include the vehicle cloud-side applications 28 that operate on the vehicle cloud 2, and the different business cloud-side applications 46 that can transmit data to and receive data from the vehicle cloud 2 and operate on devices other than the vehicle Ve, that is, operate on the so-called different business cloud 4. Signals in the requests from these applications 17, 28, and 46 to the control target devices 5 are transmitted via a hitherto known controller area network (CAN) capable of transmitting and receiving signals by differential voltages generated on two communication lines. Therefore, these applications 17, 28, and 46 are categorized based on, for example, signals transmitted from control sources including the applications 17, 28, and 46 to control destinations including the control target devices 5.

The vehicle-side arbitration unit 18 is an example of a second arbitration unit in the embodiment of the present invention, and arbitrates control commands or requests of the vehicle-side applications 17 and control commands or requests of the cloud-side applications 28 and 46 on the control target devices 5 that are received from the vehicle cloud 2. When the control target devices 5 to be operated by the requests of the applications 17, 28, and 46 overlap each other, the vehicle-side arbitration unit 18 performs arbitration to determine the application 17, 28, or 46 that finally outputs the request to the control target device 5 within the above category, or performs arbitration to adopt one of the results output by the applications 17, 28, and 46. The vehicle-side arbitration unit 18 arbitrates the requests of the applications 17, 28, and 46 based on the current timings and frequencies of acceleration, deceleration, and steering of the vehicle Ve, the conditions of the vehicle Ve, or the user's driving tendency. When control commands are output to the predetermined control target device 5 from the applications 17, 28, and 46 in other categories after the arbitration, arbitration is performed based on predetermined priority levels to determine the application 17, 28, or 46 that outputs the control command.

Specifically, the vehicle-side arbitration unit 18 has at least three types of priority levels that are examples of second priority levels in the embodiment of the present invention. The first type of priority levels is such that the highest priority level is set to the control-related application among the applications 17, 28, and 46, followed by the alert-related application and then the guidance-related application. Regarding the second type of priority levels, when control commands are output by applications having high urgency related to the safety of the vehicle Ve, including the vehicle-side application 17, among the applications 17, 28, and 46, arbitration is performed to set the highest priority level to the output of the vehicle-side application 17. Regarding the third type of priority levels, when a plurality of applications 17, 28, and 46 outputs control commands to a predetermined control target device 5 within the same category, arbitration is performed to set a higher priority level to an application 17, 28, or 46 that outputs the control command based on the latest data. By setting the priority levels in this way, an appropriate application 17, 28, or 46 or its result can be selected depending on the behavior of the vehicle Ve and the surrounding conditions around the vehicle Ve. The vehicle-side arbitration unit 18 performs arbitration among the applications 17, 28, and 46 by a plurality of arbitration units depending on the above categories. Specifically, the vehicle-side arbitration unit 18 includes a guidance control arbitration unit 18a, an alert control arbitration unit 18b, and a travel control arbitration unit 18c.

The guidance control arbitration unit 18a arbitrates guidance applications 17a, 28a, and 46a related to guidance for a user. The guidance control target device (guidance actuator) 5a that is a related on-board device operates in response to a request of the guidance application 17a, 28a, or 46a selected by the guidance control arbitration unit 18a. Examples of the output of the guidance actuator 5a based on the request of the guidance-related application 17a, 28a, or 46a include displaying a route, surrounding facilities, and the like on the navigation system or display. The alert control arbitration unit 18b arbitrates alert-related applications 17b, 28b, and 28c for notifying a user about danger. The alert control target device (alert actuator) 5b that is a related on-board device operates in response to a request of the alert application 17b, 28b, or 28c selected by the alert control arbitration unit 18b. Examples of the output of the alert actuator 5b based on the request of the alert application 17b, 28b, or 28c include displaying danger on the display or instrument panel, and sounding a beep from a loudspeaker. The travel control arbitration unit 18c arbitrates travel applications 17c, 28d, and 28e related to general control on travel of the vehicle Ve, for example, related to control on a driving force and a braking force of the vehicle Ve or turning of the vehicle Ve. The travel control target device (control actuator) 5c that is a related on-board device operates in response to a request of the travel application 17c, 28d, or 28e selected by the travel control arbitration unit 18c. Examples of the output of the control actuator 5c based on the request of the travel application 17c, 28d, or 28e include outputting a driving force from the motor and outputting a braking force from the brake device. These three arbitration units are examples of a second guidance control arbitration unit, a second alert control arbitration unit, and a second travel control arbitration unit in the embodiment of the present invention.

The vehicle Ve configured as described above is connected to the vehicle cloud 2 as shown in FIGS. 2 and 3. The vehicle cloud 2 is dedicated to a plurality of vehicles Ve including the vehicle Ve, and provides services to users via the vehicles Ve. The vehicle cloud 2 can transmit data to and receive data from the different business cloud 4. The different business cloud 4 is provided not only for the vehicles Ve but also for mobile terminals, for example, and is a so-called third-party cloud that stores and manages data, applications, and the like for use in services to be provided to users. The vehicle cloud 2 and the different business cloud 4 include a first external information processing device 20 and a second external information processing device 40 each configured by a plurality of servers or the like, respectively.

The basic functional configurations of the first external information processing device 20 and the second external information processing device 40 are substantially the same as those of the vehicle information processing device 10 configured as described above. As shown in FIG. 2, the first external information processing device 20 includes a first processor 21 configured by a CPU or the like, a first main storage device 22 including a RAM and the like, a first auxiliary storage device 23, and a first communication device 24. The second external information processing device 40 similarly includes a second processor 41 configured by a CPU or the like, a second main storage device 42 including a RAM and the like, a second auxiliary storage device 43, and a second communication device 44. The processors 21 and 41 execute programs read from the auxiliary storage devices 23 and 43 by using the main storage devices 22 and 42 as work areas, thereby executing predetermined processes related to predetermined control target devices of the vehicle Ve, respectively. The first communication device 24 communicates with the vehicle information processing device 10 and the second external information processing device 40 via the network 3. The second communication device 44 can communicate with the first external information processing device 20 and other external terminals via the network 3. The first auxiliary storage device 23 and the second auxiliary storage device 43 include memories that are non-transitory storage media.

As shown in FIG. 3, the vehicle cloud 2 configured as described above includes a data reception unit 25, a digital twin 26, an inter-cloud interface (inter-cloud I/F) 27, the vehicle cloud-side applications 28, a cloud-side arbitration unit 29, and an arbitration information transmission unit 30 at appropriate locations in the first processor 21, the first main storage device 22, the first auxiliary storage device 23, and the communication device 24.

The data reception unit 25 includes a different business cloud information acquisition unit 25a that receives data transmitted from the vehicle Ve and the different business cloud 4 via the network 3. Specifically, the different business cloud information acquisition unit 25a receives the user information 15a and the vehicle information 15b transmitted from the vehicle Ve, and control information including control commands related to the different business cloud-side applications 46 provided by the different business cloud 4 and transmitted from an application data transmission unit 45 of the second external information processing device 40 described later. In the received data, the information received from the different business cloud 4 is transmitted to the inter-cloud interface 27, and the user information 15a and the vehicle information 15b are transmitted to the digital twin 26.

The digital twin 26 is a storage functional unit for reproducing a virtual space temporally synchronized with the real world on a cloud computer by updating and storing, in real time, data on positions and travel times of the control target vehicle Ve related to current and past behaviors and conditions of the vehicle Ve that have been collected for the vehicle Ve. The digital twin 26 can generate future prediction data for the vehicle Ve in response to a request based on current and past data and information. Examples of the information included in the data stored by the digital twin 26 or acquired from the vehicle Ve include map information, road information, an identification number of the vehicle Ve, external environment information on the surroundings of the vehicle Ve, time information, position information, and the user's driving tendency and travel action patterns related to the behavior of the vehicle Ve. That is, the vehicle cloud 2 covers events currently occurring in the vehicle Ve and its surroundings by the virtual environment that is generated by the digital twin 26 and simulates the physical environment, and the applications 28 output requests based on the events.

The inter-cloud interface 27 performs data format conversion and the like to link data between the vehicle cloud 2 and the different business cloud 4. In the embodiment of the present invention, as shown in FIG. 1, the guidance application whose data is stored or managed on the different business cloud 4 is provided to the vehicle Ve. Therefore, when the guidance application 46a on the different business cloud 4 outputs a request, the inter-cloud interface 27 receives the data of the guidance application 46a and converts it into a format operable in the vehicle Ve.

The vehicle cloud-side applications 28 are examples of the vehicle control application in the embodiment of the present invention, and operate the control target devices 5 of the vehicle Ve. In the embodiment of the present invention, the first guidance application 28a, the first alert application 28b, the second alert application 28c, the first travel application 28d, and the second travel application 28e operate on the vehicle cloud 2. Among these vehicle cloud-side applications 28, applications of the same type such as the first travel application 28d and the second travel application 28e can basically output different control commands to operate the control target devices 5, but may overlap to operate a predetermined control target device 5 depending on the details of control. In the embodiment of the present invention, the applications on the vehicle cloud 2 are also categorized into three types, and arbitration is performed to determine an application that finally outputs a control command to a predetermined control target device 5 within the category. The vehicle cloud 2 in the embodiment of the present invention includes the cloud-side arbitration unit 29 for that purpose.

The cloud-side arbitration unit 29 is an example of a first arbitration unit in the embodiment of the present invention, and includes, as shown in FIG. 3, a cloud-side guidance control arbitration unit 29a for arbitrating guidance control commands output by the guidance-related applications, a cloud-side alert control arbitration unit 29b for arbitrating alert control commands output by the alert-related applications, and a cloud-side travel control arbitration unit 29c for arbitrating travel control commands output by the control-related applications. The cloud-side arbitration unit 29 acquires, from the digital twin 26, current information about the vehicle Ve that is obtained by reproduction and simulation on the digital twin 26. The cloud-side arbitration unit 29 determines, for each type, the application 28 or 46 that actually operates the control target device 5 based on the acquired information about the vehicle Ve and the cloud-side applications 28 and 46 that output control commands. When the different business cloud-side application 46 provided from the different business cloud 4 operates, arbitration is executed including the different business cloud-side application 46 based on predetermined priority levels. These three arbitration units are examples of a plurality of arbitration processing units in the embodiment of the present invention, and are examples of a first guidance control arbitration unit, a first alert control arbitration unit, and a first travel control arbitration unit.

Specifically, similarly to the vehicle-side arbitration unit 18, the cloud-side arbitration unit 29 has at least two types of priority levels that are examples of first priority levels in the embodiment of the present invention. The first type of priority levels is such that the highest priority level is set to the control-related application among the applications 17, 28, and 46, followed by the alert-related application and then the guidance-related application. Regarding the second type of priority levels, when a plurality of applications 17, 28, and 46 operates for a predetermined control target device 5 within the same category, arbitration is performed to set a higher priority level to an application 17, 28, or 46 that outputs a control command based on the latest data. When the application 28 or 46 that actually transmits a request to the control target device 5 is determined in this way, the data of the determined application 28 or 46 is transmitted to the arbitration information transmission unit 30. When the final selection of the application 17, 28, or 46 for controlling the control target device 5 is executed by the cloud-side arbitration unit 29 instead of the vehicle-side arbitration unit 18, arbitration may be performed to set the highest priority level to the vehicle-side application 17 in an event having high urgency related to the safety.

In addition to the above, arbitration is executed based on urgency and importance for the user and the vehicle Ve. For example, when information about an obstacle near the traveling vehicle Ve but outside a planned travel route and information about an accident that has occurred away from the vehicle Ve compared with the obstacle but has occurred on the planned travel route are acquired and the same control target device 5 related to guidance is operated based on these pieces of information, arbitration is performed to transmit the accident information to the user with priority. In the above description, the requests output by the applications 17, 28, and 46 to operate the control target device 5 are arbitrated, but the applications 17, 28, and 46 may be arbitrated before the output of the requests in response to satisfaction of conditions to activate a plurality of applications 17a that operates the predetermined control target device 5.

The arbitration information transmission unit 30 transmits a result of arbitration performed by the cloud-side arbitration unit 29 to the vehicle information processing device 10. That is, the arbitration information transmission unit 30 transmits, to the vehicle Ve via the network 3, information about the application 28 or 46 that actually outputs a control command or request to the control target device 5.

The different business cloud 4 is the second external information processing device in the embodiment of the present invention, and as described above, is a so-called third-party cloud that stores and manages data, applications, and the like for use in services to be provided to, for example, mobile terminals as well as the vehicle Ve. Therefore, the formats of data, applications, and the like may be different from the formats operable for the control target devices 5 of the vehicle Ve. The data of the different business cloud-side guidance application 46a shown in FIG. 3 that is the different business cloud-side application 46 on the different business cloud 4 is transmitted to the data reception unit 25 on the vehicle cloud 2 via the application data transmission unit 45. The inter-cloud interface 27 converts the data format or the like, and provides the data to the vehicle Ve. The different business cloud-side guidance application 46a on the different business cloud 4 provides, for example, weather forecast and road information to the vehicle Ve. Although illustration is omitted, the different business cloud 4 may include not only the guidance-related application described above but also an application related to alert to the vehicle Ve, a control-related application, or the like. The vehicle-side applications 17, the vehicle cloud-side applications 28, and the different business cloud-side applications 46 described above are examples of predetermined applications in the embodiment of the present invention.

Regarding the categorization of the applications 17, 28, and 46 of the information processing devices 10, 20, and 40 configured as described above, description will be given of an exemplary case where pre-crash safety (PCS) of the vehicle Ve operates in response to sudden appearance of an object such as a pedestrian or another vehicle in front of the vehicle Ve. In response to detection of the object, the guidance applications 17a, 28a, and 46a output, to the guidance control target device 5a such as the instrument panel or the loudspeaker, control commands to output display or sound for alerting a user or occupant. When the vehicle Ve approaches the object, the alert applications 17b, 28b, and 28c output, to the alert control target device 5b, control commands to alert the user or occupant more strongly than the guidance applications 17a, 28a, and 46a. For example, the display of the instrument panel is flashed, intermittent sound is emitted from the loudspeaker, the steering wheel of the vehicle Ve is vibrated, or the accelerator pedal is locked or the reaction force is increased so that it cannot further be depressed. When the vehicle Ve further approaches the object, the travel applications 17c, 28d, and 28e output, to the travel control target device 5, control commands to alert the user or occupant more strongly than the alert applications 17b, 28b, and 28c and control the travel of the vehicle Ve. For example, the display of the instrument panel is made more conspicuous, the alert sound is made continuous, steering intervention control is performed to negotiate the object, brake intervention operation is performed to sharply decelerate the vehicle Ve, or the output torque of a driving force source is set to zero regardless of the operation amount of the accelerator pedal. In this way, the applications 17, 28, and 46 operate the control target devices 5, and control the vehicle Ve to avoid collision of the vehicle Ve with the object or reduce damage even if the vehicle Ve collides with the object.

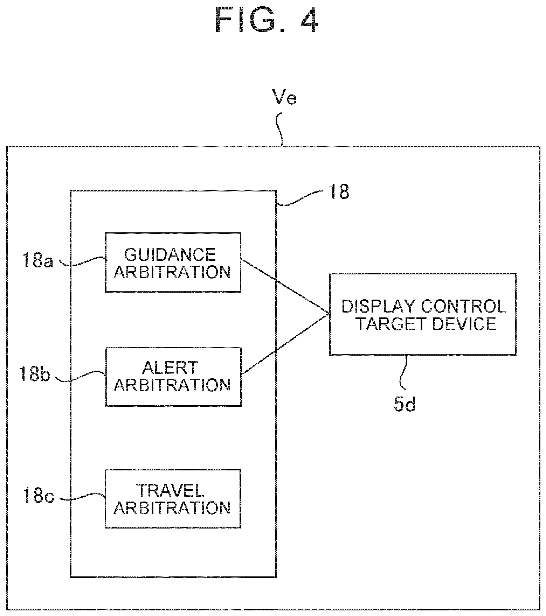

Next, control to be executed by the vehicle-side arbitration unit 18 when the control target devices (actuators) 5 to which control commands are output from the applications in different categories overlap each other will be described with reference to FIG. 4. The vehicle Ve includes not only the above actuator 5 dedicated to guidance, alert, or control but also a display actuator 5d that can output both guidance and alert notifications, as typified by a display control target device such as an information display. A control command or request of the guidance application 17a, 28a, or 46a selected by the guidance control arbitration unit 18a and a control command or request of the alert application 17b, 28b, or 28c selected by the alert control arbitration unit 18b may be transmitted to the display actuator 5d with an overlap. In such a case, the vehicle-side arbitration unit 18 gives priority to the output of the alert application 17b, 28b, or 28c determined through the arbitration by the alert control arbitration unit 18b. This is because, comparing the guidance application 17a, 28a, or 46a with the alert application 17b, 28b, or 28c, the alert application 17b, 28b, or 28c often provides information having higher urgency and importance for the vehicle Ve or the user.

Although illustration is omitted, when a request of the alert application 17b, 28b, or 28c and a request of the travel application 17c, 28d, or 28e are made for the same actuator, priority is given to the request of the travel application 17c, 28d, or 28e. Although the alert application 17b, 28b, or 28c provides information having high urgency and importance, the travel application 17c, 28d, or 28e actually changes the timings and frequencies of acceleration, deceleration, and steering of the vehicle Ve depending on the conditions on the travel route. If priority is given to the output of the alert application 17b, 28b, or 28c, there is a possibility that the vehicle Ve cannot execute the appropriate behavior as described above. Therefore, priority is given to the travel application 17c, 28d, or 28e over the alert application 17b, 28b, or 28c to avoid such a situation.

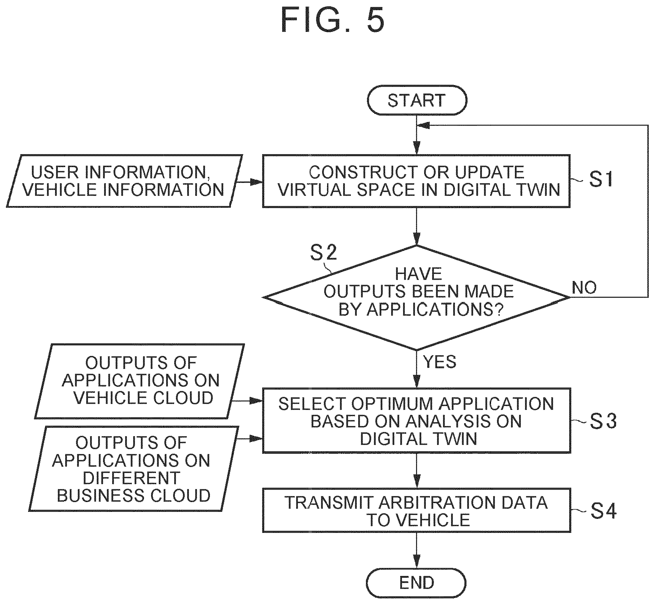

Next, description will be given of an example of control to be executed in the vehicle cloud 2 and the vehicle Ve in the vehicle information processing system 1 configured as described above. A flowchart shown in FIG. 5 shows control to be executed in the vehicle cloud 2 when arbitrating the applications 28 and 46 including the applications 28 on the vehicle cloud 2 and the different business cloud-side applications 46 on the different business cloud 4 to determine the application 28 or 46 that actually outputs a control command or request to the control target device 5.

In Step S1, a virtual space is constructed or updated in the digital twin 26 based on the acquired user information 15a and the acquired vehicle information 15b. As described above, in the vehicle cloud 2, the digital twin 26 constructs and updates as appropriate a virtual space that simulates the physical environment based on the user information 15a and the vehicle information 15b received from the vehicle Ve, thereby always grasping current behavior of the vehicle Ve and current surrounding conditions. By constructing and updating the virtual space as appropriate, the current vehicle Ve and its surrounding environment can be grasped accurately. Thus, when the cloud-side application 28 or 46 on the vehicle cloud 2 or the different business cloud 4 outputs a request to the control target device 5, activation of a wrong application 28 or 46 due to a time lag with an event occurring in reality can be reduced. When the digital twin 26 completes the construction and update of the virtual space for arbitration, the process proceeds to Step S2.

In Step S2, determination is made as to whether requests are made by the cloud-side applications 28 and 46. In Step S2, determination is made as to whether requests to operate the control target device 5 are made by the vehicle cloud-side application 28 provided from the vehicle cloud 2 and the different business cloud-side application 46 provided from the different business cloud 4. Examples of such a case include a case where road information or the like is newly acquired, a case where requests are made by the cloud-side guidance applications 28a and 46a to notify a user in response to the road information or the like, or a case where requests are made by the alert applications 28b and 28c on the vehicle cloud 2 in response to the surrounding conditions around the vehicle Ve obtained based on simulation in the digital twin 26. When no control command is made by the applications 28 and 46, this flowchart is temporarily terminated without executing subsequent control.

When requests to operate the control target device 5 are made by the applications in response to a change in the conditions, the data of the vehicle cloud-side application 28 and the data of the different business cloud-side application 46 are acquired and the process proceeds to Step S3. In Step S3, analysis is performed on the digital twin 26, and control is performed to make an output from the optimum application 28 or 46 based on the user's driving tendency and the current conditions of the vehicle Ve. Specifically, the cloud-side arbitration unit 29 checks the outputs of the cloud-side applications 28 and 46 against the conditions of the vehicle Ve and the surrounding environment around the vehicle Ve on the digital twin 26, and arbitration is performed to determine the appropriate application 28 or 46 based on predicted conditions obtained as a result. At that time, the cloud-side arbitration unit 29 executes arbitration based on the above priority levels and the like. For example, when a request to operate the control target device 5 from the guidance application 17a, 28a, or 46a to notify the user about information on guidance overlaps a request to operate the control target device 5 from the travel application 17c, 28d, or 28e to avoid contact with a pedestrian appearing in front of the vehicle Ve, the request of the travel application 17c, 28d, or 28e is processed with priority. When the application 28 or 46 to make an output is selected through the arbitration, the process proceeds to Step S4. In Step S4, the result of the arbitration, that is, the data related to the selected application 28 or 46 is transmitted to the vehicle Ve via the arbitration information transmission unit 30 on the vehicle cloud 2, and this flowchart is temporarily terminated.

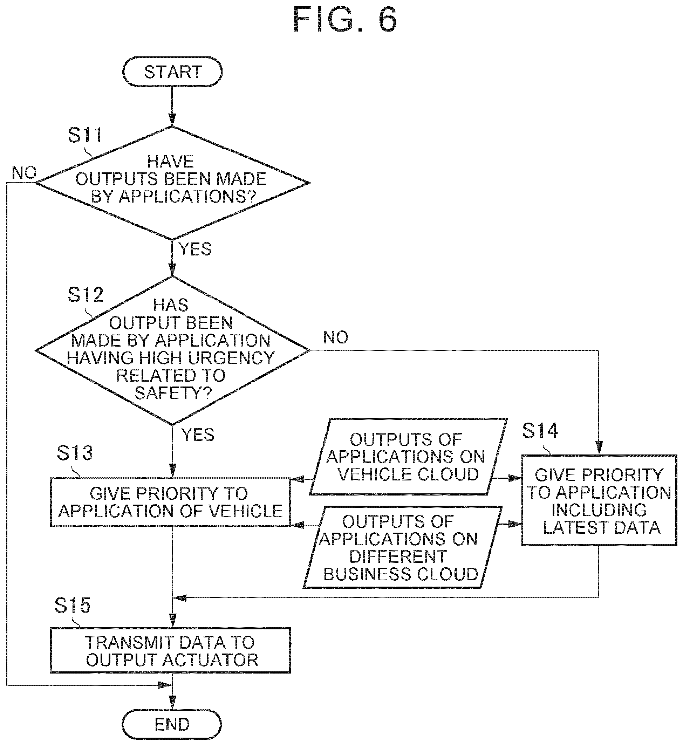

Next, an example of control to be executed by the vehicle Ve will be described. The flowchart of FIG. 6 shows control to be executed when arbitrating requests of the applications 17, 28, and 46 in the vehicle Ve. That is, the flowchart shows an example of control to be executed by the vehicle-side arbitration unit 18 to arbitrate control commands or requests of the applications 17, 28, and 46 that operate on the vehicle Ve and the clouds 2 and 4 when the control target devices 5 to be operated by the control commands or requests of the applications 17, 28, and 46 overlap each other.

In Step S11, determination is made as to whether outputs are made by the applications 17, 28, and 46. In Step S11, determination is made as to whether outputs are made from a plurality of applications among the vehicle-side applications 17, the vehicle cloud-side applications 28, and the different business cloud-side applications 46. That is, in Step S11, determination is made as to whether the control target devices 5 overlap each other based on the outputs of the control commands of the applications 17, 28, and 46. Therefore, when there is no request to the control target device 5 from the applications 17, 28, and 46, when only one application 17, 28, or 46 outputs a request, or when the control target devices 5 to be operated by the control commands of the applications 17, 28, and 46 that operate on the vehicle Ve and the clouds 2 and 4 do not overlap each other, negative determination is made in Step S11, and this flowchart is temporarily terminated without executing subsequent control. When the control target devices 5 to be operated by the control commands or requests of the applications 17, 28, and 46 overlap each other, positive determination is made in Step S11, and the process proceeds to Step S12.

In Step S12, determination is made as to whether a request is made by the application 17, 28, or 46 to operate the control target device 5 related to the safety of the vehicle Ve or the user among the applications 17, 28, and 46 that output the control commands. That is, determination is made as to whether the applications 17, 28, and 46 include any application 17, 28, or 46 that outputs a request to the control target device 5 to be operated immediately because of high urgency and importance for safe travel of the vehicle Ve or safe driving of the occupant. For example, the application 17, 28, or 46 having high urgency and importance notifies the user with the beeper or display that the sensor of the vehicle Ve detects an obstacle ahead of the vehicle Ve on the travel route with no information in advance. Alternatively, the application 17, 28, or 46 controls the motor that outputs a driving force to negotiate the obstacle, or controls the brake to output a braking force to stop the vehicle Ve behind the obstacle. When positive determination is made in Step S12 because the output is made by the application 17, 28, or 46 related to the safety of the vehicle Ve and the occupant, the process proceeds to Step S13.

In Step S13, when the output is made by the application 17, 28, or 46 related to the safety, control is performed to give priority to the output of the vehicle-side application 17 installed in the vehicle Ve. Since the communication between the vehicle Ve and the vehicle cloud 2 or the different business cloud 4 is performed via the network 3, communication delay occurs inevitably. Therefore, the vehicle cloud 2 may require a relatively long period to acquire information about the vehicle Ve or a sudden change in the surrounding environment around the vehicle Ve. That is, when the output is made by the application 17, 28, or 46 having high urgency, there is a strong possibility that the current situation can be grasped more accurately by using information acquired by the vehicle Ve. Therefore, the vehicle-side arbitration unit 18 gives priority to the request to the control target device 5 from the application 17 in the vehicle Ve in accordance with the above priority levels. Thus, it is possible to accurately handle a highly urgent event in or around the vehicle Ve. In this flowchart, determination is not made as to whether the output of the vehicle-side application 17 is included in the outputs of the applications 17, 28, and 46 having high urgency on the safety. This is because, in a normal vehicle Ve, a device for avoiding danger, including the control target device 5, automatically operates in a safety-related event and no special step is required. When the application to make the output is selected in Step S13, the process proceeds to Step S15. In Step S15, data is transmitted to the actuator to be operated by the application to make the output, and this routine is temporarily terminated.

When there is no output of the control command of the safety-related application 17, 28, or 46 among the applications 17, 28, and 46 that make the outputs in Step S12, the process proceeds to Step S14. In Step S14, the vehicle-side arbitration unit 18 performs arbitration based on the predetermined priority levels to give priority to the output of any one of the requests of the applications 17, 28, and 46 including the latest data. For example, an application including the latest information on the travel route and the weather is selected in the case of the guidance applications 17a, 28a, and 46. After the application 17, 28, or 46 that makes the output based on the latest data is selected with priority, the process proceeds to Step S15, and data is transmitted to the actuator 5 targeted by the selected application 17, 28, or 46. Then, this routine is temporarily terminated.

According to the vehicle information processing system 1 configured as described above, the vehicle Ve and the vehicle cloud 2 include the applications 17, 28, and 46 that operate the control target devices 5 of the vehicle Ve. Therefore, the size of data stored in the vehicle Ve can be reduced. The vehicle Ve and the vehicle cloud 2 include the vehicle-side arbitration unit 18 and the cloud-side arbitration unit 29, respectively, to select the application 17, 28, or 46 when the requests to operate the control target device 5 from the applications 17, 28, and 46 overlap each other. The cloud-side arbitration unit 29 categorizes the applications 28 and 46 that operate on the clouds 2 and 4 into guidance, alert, and control, and arbitrates the outputs of the applications 28 and 46 corresponding to each category. Therefore, the communication data of the applications 28 and 46 transmitted to the vehicle Ve can be reduced.

The result of the arbitration by the cloud-side arbitration unit 29 is transmitted to the vehicle-side arbitration unit 18. The vehicle-side arbitration unit 18 performs arbitration to select the application 17, 28, or 46 that actually makes the output for each type of the applications 17, 28, and 46 based on the received result and the applications 17, 28, and 46 that operate in the vehicle Ve. Therefore, the appropriate application 17, 28, or 46 can be selected depending on the vehicle Ve and the surrounding conditions around the vehicle Ve, and the notification to the user and the behavior of the vehicle Ve can be optimized. By providing the types for the applications 17, 28, and 46, it is possible to facilitate development of the applications 46 that operate the control target devices 5 by the so-called third party. In the vehicle cloud 2, the current conditions of the vehicle Ve are reproduced in real time by using the digital twin 26, and the application that makes the output is selected. Thus, the vehicle Ve can be controlled with high accuracy even by the application 28 on the vehicle cloud 2.

At least three types of priority levels are provided based on the categories of the applications 17, 28, and 46. Specifically, when the same control target device (actuator) 5 is operated by outputs of different types of applications, the highest priority is given to the travel application 17c, 28d, or 28e, followed by the alert application 17b, 28b, or 28c, and then the guidance application 17a, 28a or 46a. Therefore, the application having high urgency and importance for the vehicle Ve or the user can be operated with priority. Thus, the vehicle Ve can behave appropriately and the user can comfortably ride the vehicle. When control commands are output by the applications 17, 28, and 46 having high urgency and importance related to the safety of the vehicle Ve, including the vehicle-side application 17, among the applications 17, 28, and 46, arbitration is performed to set the highest priority level to the output of the vehicle-side application 17. Regarding the danger of the vehicle Ve, it is predicted that the data detected by the vehicle Ve is the latest or accurate. By setting such priority levels, the safety of the vehicle Ve and the user can further be increased. When a plurality of applications 17, 28, and 46 operates for a predetermined control target device 5 within the same category, arbitration is performed to set a higher priority level to an application 17, 28, or 46 that makes an output based on the latest data. With such priority levels, it is possible to control the vehicle Ve or guide the user constantly based on the latest information among the acquired pieces of information.

Although the embodiment of the present invention has been described above, the present invention is not limited to the above examples, and modifications may be made as appropriate within the scope to achieve the object of the present invention. This embodiment can be regarded as a method to be executed by the vehicle information processing system and a control program for executing this method. Alternatively, this embodiment can be regarded as a method to be executed by the vehicle information processing device or the external information processing device, a control program for executing this method, and a non-transitory computer-readable storage medium storing the control program.

## Claims

1. A vehicle information processing system (1) comprising:
a vehicle information processing device (10) mounted on a vehicle (Ve);
a vehicle cloud (2) including a first external information processing device (20) provided outside the vehicle (Ve); and
a plurality of vehicle control applications (28, 17) configured to output control commands to control target devices (5) of the vehicle (Ve), the vehicle control applications (28, 17) being installed in the vehicle information processing device (10) and in the first external information processing device (20);
wherein the vehicle information processing system (1) comprises an arbitration unit comprising a first arbitration unit (29) provided in the first external information processing device (20) and comprising a second arbitration unit (18) provided in the vehicle information processing device (10), the first arbitration unit (29) being configured to arbitrate the control commands for a predetermined one of the control target devices (5) to determine one control command that is configured to be transmitted to the vehicle (Ve), the control commands for the predetermined one of the control target devices (5) being obtained by the vehicle control applications, and wherein the second arbitration unit (18) is configured to arbitrate the control commands obtained by the vehicle control application (17) installed in the vehicle information processing device (10) and the control command transmitted from the first external information processing device (20).

2. The vehicle information processing system (1) according to claim 1, further comprising a second external information processing device (40) including a predetermined application (46) configured to output a control command to at least one of the control target devices (5), the second external information processing device (40) being provided outside the vehicle (Ve) and the first external information processing device (20), wherein:
the first external information processing device (20) includes a reception unit (25) configured to receive control information including the control command of the predetermined application (46); and
the arbitration unit is configured to arbitrate the control commands configured to be output by the vehicle control applications and the control information received by the reception unit (25).

3. The vehicle information processing system (1) according to claim 1, wherein:
the second arbitration unit (18) includes a plurality of arbitration processing units (18a, 18b, 18c) associated with types of the control commands; and
the second arbitration unit (18) is configured to arbitrate the control commands based on a predetermined type of priority levels when the control target devices (5) to be subjected to the control commands overlap each other, the control commands being arbitrated by the arbitration processing units (18a, 18b, 18c).

4. The vehicle information processing system according to claim 3, wherein:
the second arbitration unit (18) includes
a guidance control arbitration unit (18a) configured to arbitrate guidance control commands for guiding the vehicle (Ve),
an alert control arbitration unit (18b) configured to arbitrate alert control commands for issuing alert, the alert being related to driving of the vehicle (Ve), and
a travel control arbitration unit (18c) configured to arbitrate travel control commands for causing the vehicle (Ve) to travel; and
the type of priority levels includes a highest priority level for the travel control commands, a second highest priority level for the alert control commands, and a third highest priority level for the guidance control commands.

5. The vehicle information processing system (1) according to claim 3, wherein:
the second arbitration unit (18) is configured to, when a plurality of the control commands is present, determine whether a control command with high urgency related to safety of the vehicle (Ve) is present among the control commands; and
the type of priority levels includes giving a highest priority level to the control command obtained by the vehicle control application (17) installed in the vehicle (Ve) when a request of the control commands with the high urgency related to the safety of the vehicle (Ve) is present among the control commands.

6. The vehicle information processing system (1) according to claim 3, wherein the type of priority levels includes priority levels determined such that a higher priority level is given to the control command that is output based on latest data among a plurality of the control commands.

7. The vehicle information processing system (1) according to claim 1, wherein:
the vehicle control applications (28) installed in the first external information processing device (20) include an application configured to process information about the vehicle (Ve), the information about the vehicle being transmitted from the vehicle information processing device (10);
and
the information about the vehicle (Ve) includes
user information (15a) including information about a driving tendency of a user in the vehicle (Ve), and
vehicle information (15b) including information about a current position and a vehicle speed of the vehicle (Ve).

8. The vehicle information processing system (1) according to claim 7, wherein:
the first external information processing device (20) is configured to construct, in a virtual space, a digital twin (26) synchronized in time with a real world, the digital twin (26) being constructed based on the user information (15a) and the vehicle information (15b); and
the first arbitration unit (29) is configured to perform arbitration based on information obtained by the digital twin.

## Patentansprüche

1. Fahrzeuginformationsverarbeitungssystem (1), das Folgendes umfasst:
eine Fahrzeuginformationsverarbeitungsvorrichtung (10), die in einem Fahrzeug (Ve) montiert ist;
eine Fahrzeugcloud (2), die eine erste externe Informationsverarbeitungsvorrichtung (20) beinhaltet, die außerhalb des Fahrzeugs (Ve) bereitgestellt ist; und
eine Vielzahl von Fahrzeugsteueranwendungen (28, 17), die dazu ausgelegt sind, an Steuerzielvorrichtungen (5) des Fahrzeugs (Ve) Steuerbefehle auszugeben, wobei die Fahrzeugsteueranwendungen (28, 17) in der Fahrzeuginformationsverarbeitungsvorrichtung (10) und in der ersten externen Informationsverarbeitungsvorrichtung (20) installiert sind;
wobei das Fahrzeuginformationsverarbeitungssystem (1) eine Arbitrierungseinheit umfasst, die eine erste Arbitrierungseinheit (29), die in der ersten externen Informationsverarbeitungsvorrichtung (20) bereitgestellt ist, und eine zweite Arbitrierungseinheit (18) umfasst, die in der Fahrzeuginformationsverarbeitungsvorrichtung (10) bereitgestellt ist, wobei die erste Arbitrierungseinheit (29) dazu ausgelegt ist, die Steuerbefehle für eine vorbestimmte der Steuerzielvorrichtungen (5) zu arbitrieren, um einen Steuerbefehl zu bestimmen, der dazu ausgelegt ist, zum Fahrzeug (Ve) übertragen zu werden, wobei die Steuerbefehle für die vorbestimmte der Fahrzeugsteuervorrichtungen (5) von den Fahrzeugsteueranwendungen erhalten werden, und wobei die zweite Arbitrierungseinheit (18) dazu ausgelegt ist, die Steuerbefehle, die von der Fahrzeugsteueranwendung (17) erhalten werden, die in der Fahrzeuginformationsverarbeitungsvorrichtung (10) installiert ist, und den Steuerbefehl, der von der ersten externen Informationsverarbeitungsvorrichtung (20) übertragen wird, zu arbitrieren.

2. Fahrzeuginformationsverarbeitungssystem (1) nach Anspruch 1, das ferner eine zweite externe Informationsverarbeitungsvorrichtung (40) umfasst, die eine vorbestimmte Anwendung (46) beinhaltet, die dazu ausgelegt ist, an mindestens eine der Steuerzielvorrichtungen (5) einen Steuerbefehl auszugeben, wobei die zweite externe Informationsverarbeitungsvorrichtung (40) außerhalb des Fahrzeugs (Ve) und der ersten externen Informationsverarbeitungsvorrichtung (20) bereitgestellt ist, wobei:
die erste externe Informationsverarbeitungsvorrichtung (20) eine Empfangseinheit (25) beinhaltet, die dazu ausgelegt ist, Steuerinformationen zu empfangen, die den Steuerbefehl der vorbestimmten Anwendung (46) beinhalten; und
die Arbitrierungseinheit dazu ausgelegt ist, die Steuerbefehle, die dazu ausgelegt sind, von den Fahrzeugsteueranwendungen ausgegeben zu werden, und die von der Empfangseinheit (25) empfangenen Steuerinformationen zu arbitrieren.

3. Fahrzeuginformationsverarbeitungssystem (1) nach Anspruch 1, wobei:
die zweite Arbitrierungseinheit (18) eine Vielzahl von Arbitrierungsverarbeitungseinheiten (18a, 18b, 18c) beinhaltet, die mit Arten der Steuerbefehle verknüpft sind; und
die zweite Arbitrierungseinheit (18) dazu ausgelegt ist, die Steuerbefehle auf Basis einer vorbestimmten Art von Prioritätsstufen zu arbitrieren, wenn die Steuerzielvorrichtungen (5), die den Steuerbefehlen zu unterziehen sind, einander überlappen, wobei die Steuerbefehle von den Arbitrierungsverarbeitungseinheiten (18a, 18b, 18c) arbitriert werden.

4. Fahrzeuginformationsverarbeitungssystem nach Anspruch 3, wobei:
die zweite Arbitrierungseinheit (18) Folgendes beinhaltet
eine Führungssteuerarbitrierungseinheit (18a), die dazu ausgelegt ist, Führungssteuerbefehle zum Führen des Fahrzeugs (Ve) zu arbitrieren,
eine Warnsteuerarbitrierungseinheit (18b), die dazu ausgelegt ist, Warnsteuerbefehle zum Ausgeben einer Warnung zu arbitrieren, wobei sich die Warnung auf ein Fahren des Fahrzeugs (Ve) bezieht, und
eine Fahrsteuerarbitrierungseinheit (18c), die dazu ausgelegt ist, Fahrsteuerbefehle zum Veranlassen des Fahrzeugs (Ve) zu fahren, zu arbitrieren; und
die Art von Prioritätsstufen eine höchste Prioritätsstufe für die Fahrsteuerbefehle, eine zweithöchste Prioritätsstufe für die Warnsteuerbefehle und eine dritthöchste Prioritätsstufe für die Führungssteuerbefehle beinhaltet.

5. Fahrzeuginformationsverarbeitungssystem (1) nach Anspruch 3, wobei:
die zweite Arbitrierungseinheit (18) dazu ausgelegt ist, wenn eine Vielzahl der Steuerbefehle vorhanden ist, zu bestimmen, ob ein Steuerbefehl einer hohen Dringlichkeit mit Bezug auf die Sicherheit des Fahrzeugs (Ve) unter den Steuerbefehlen vorhanden ist; und
die Art von Prioritätsstufen das Zuweisen einer höchsten Prioritätsstufe für den Steuerbefehl beinhaltet, der von der Fahrzeugsteueranwendung (17) erhalten wird, die im Fahrzeug (Ve) installiert ist, wenn eine Anforderung der Steuerbefehle mit der hohen Dringlichkeit mit Bezug auf die Sicherheit des Fahrzeugs (Ve) unter den Steuerbefehlen vorhanden ist.

6. Fahrzeuginformationsverarbeitungssystem (1) nach Anspruch 3, wobei die Art von Prioritätsstufen Prioritätsstufen beinhalten, die derart bestimmt werden, dass eine höhere Prioritätsstufe dem Steuerbefehl zugewiesen wird, der auf Basis von letzten Daten unter einer Vielzahl von Steuerbefehlen ausgegeben wird.

7. Fahrzeuginformationsverarbeitungssystem (1) nach Anspruch 1, wobei:
die Fahrzeugsteueranwendungen (28), die in der ersten externen Informationsverarbeitungsvorrichtung (20) installiert sind, eine Anwendung beinhalten, die dazu ausgelegt ist, Informationen über das Fahrzeug (Ve) zu verarbeiten, wobei die Informationen über das Fahrzeug von der Fahrzeuginformationsverarbeitungsvorrichtung (10) übertragen werden; und
die Informationen über das Fahrzeug (Ve) Folgendes beinhalten
Benutzerinformationen (15a), die Informationen über eine Fahrtendenz eines Benutzers im Fahrzeug (Ve) beinhalten, und
Fahrzeuginformationen (15b), die Informationen über eine aktuelle Position und eine Fahrzeuggeschwindigkeit des Fahrzeugs (Ve) beinhalten.

8. Fahrzeuginformationsverarbeitungssystem (1) nach Anspruch 7, wobei:
die erste externe Informationsverarbeitungsvorrichtung (20) dazu ausgelegt ist, in einem virtuellen Raum einen digitalen Zwilling (26) zu konstruieren, der zeitlich mit einer realen Welt synchronisiert ist, wobei der digitale Zwilling (26) auf Basis der Benutzerinformationen (15a) und der Fahrzeuginformationen (15b) konstruiert wird; und
die erste Arbitrierungseinheit (29) dazu ausgelegt ist, eine Arbitrierung auf Basis von Informationen durchzuführen, die vom digitalen Zwilling erhalten werden.

## Revendications

1. Système de traitement d'information de véhicule (1) comprenant :
un dispositif de traitement d'information de véhicule (10) monté sur un véhicule (Ve) ;
un nuage de véhicule (2) comprenant un premier dispositif de traitement d'information externe (20) prévu à l'extérieur du véhicule (Ve) ; et
une pluralité d'applications de commande de véhicule (28, 17) configurées pour délivrer des commandes de contrôle pour commander des dispositifs de cible (5) du véhicule (Ve), les applications de commande de véhicule (28, 17) étant installées dans le dispositif de traitement d'information de véhicule (10) et dans le premier dispositif de traitement d'information externe (20) ;
le système de traitement d'information de véhicule (1) comprenant
une unité d'arbitrage comprenant une première unité d'arbitrage (29) prévue dans le premier dispositif de traitement d'information externe (20) et comprenant une deuxième unité d'arbitrage (18) prévue dans le dispositif de traitement d'information de véhicule (10), la première unité d'arbitrage (29) étant configurée pour arbitrer les commandes de contrôle pour l'un des dispositifs de cible de commande (5) prédéterminé afin de déterminer une commande de contrôle qui est configurée pour être transmise au véhicule (Ve), les commandes de contrôle pour l'un des dispositifs de cible de commande (5) prédéterminé étant obtenues par les applications de commande de véhicule, et la deuxième unité d'arbitrage (18) étant configurée pour arbitrer les commandes de contrôle obtenues par l'application de commande de véhicule (17) installée dans le dispositif de traitement d'information de véhicule (10) et la commande de contrôle transmise depuis le premier dispositif de traitement d'information externe (20).

2. Système de traitement d'information de véhicule (1) selon la revendication 1, comprenant en outre un deuxième dispositif de traitement d'information externe (40) comprenant une application prédéterminée (46) configurée pour délivrer une commande de contrôle à au moins un des dispositifs de cible de commande (5), le deuxième dispositif de traitement d'information externe (40) étant prévu à l'extérieur du véhicule (Ve) et du premier dispositif de traitement d'information externe (20), dans lequel :
le premier dispositif de traitement d'information externe (20) comprend une unité de réception (25) configurée pour recevoir de l'information de commande comprenant la commande de contrôle de l'application prédéterminée (46) ; et
l'unité d'arbitrage est configurée pour arbitrer les commandes de contrôle configurées pour être délivrées par les applications de commande de véhicule et l'information de commande reçue par l'unité de réception (25).

3. Système de traitement d'information de véhicule (1) selon la revendication 1, dans lequel :
la deuxième unité d'arbitrage (18) comprend une pluralité d'unités de traitement d'arbitrage (18a, 18b, 18c) associées à des types de commandes de contrôle ; et
la deuxième unité d'arbitrage (18) est configurée pour arbitrer les commandes de contrôle sur la base d'un type prédéterminé de niveaux de priorité quand les dispositifs de cible de commande (5) devant être soumis aux commandes de contrôle se chevauchent, les commandes de contrôle étant arbitrées par les unités de traitement d'arbitrage (18a, 18b, 18c).

4. Système de traitement d'information de véhicule selon la revendication 3, dans lequel :
la deuxième unité d'arbitrage (18) comprend
une unité d'arbitrage de commande de guidage (18a) configurée pour arbitrer des commandes de contrôle de guidage pour guider le véhicule (Ve),
une unité d'arbitrage de commande d'alerte (18b) configurée pour arbitrer des commandes de contrôle d'alerte pour délivrer une alerte, l'alerte étant liée à la conduite du véhicule (Ve), et
une unité d'arbitrage de commande de déplacement (18c) configurée pour arbitrer des commandes de contrôle de déplacement pour amener le véhicule (Ve) à se déplacer ; et
le type de niveaux de priorité comprend un niveau de priorité le plus élevé pour les commandes de contrôle de déplacement, un deuxième niveau de priorité le plus élevé pour les commandes de contrôle d'alerte, et un troisième niveau de priorité le plus élevé pour les commandes de contrôle de guidage.

5. Système de traitement d'information de véhicule (1) selon la revendication 3, dans lequel :
la deuxième unité d'arbitrage (18) est configurée pour, quand une pluralité de commandes de contrôle est présente, déterminer si une commande de contrôle avec une urgence élevée liée à la sécurité du véhicule (Ve) est présente parmi les commandes de contrôle ; et
le type de niveaux de priorité comprend le fait de donner un niveau de priorité le plus élevée à la commande de contrôle obtenue par l'application de commande de véhicule (17) installée dans le véhicule (Ve) quand une demande de commandes de contrôle avec l'urgence élevée liée à la sécurité du véhicule (Ve) est présente parmi les commandes de contrôle.

6. Système de traitement d'information de véhicule (1) selon la revendication 3, dans lequel le type de niveaux de priorité comprend des niveaux de priorité déterminés de telle sorte qu'un niveau de priorité plus élevé est indiqué à la commande de contrôle qui est délivrée sur la base des dernières données parmi une pluralité de commandes de contrôle.

7. Système de traitement d'information de véhicule (1) selon la revendication 1, dans lequel :
les applications de commande de véhicule (28) installées dans le premier dispositif de traitement d'information externe (20) comprennent une application configurée pour traiter de l'information concernant le véhicule (Ve), l'information concernant le véhicule étant transmise depuis le dispositif de traitement d'information de véhicule (10) ; et
l'information concernant le véhicule (Ve) comprend
de l'information d'utilisateur (15a) comprenant de l'information sur une tendance de conduite d'un utilisateur dans le véhicule (Ve), et
de l'information de véhicule (15b) comprenant de l'information sur une position courante et une vitesse de véhicule du véhicule (Ve).

8. Système de traitement d'information de véhicule (1) selon la revendication 7, dans lequel :
le premier dispositif de traitement d'information externe (20) est configuré pour construire, dans un espace virtuel, un jumeau numérique (26) synchronisé dans le temps avec un monde réel, le jumeau numérique (26) étant construit sur la base de l'information d'utilisateur (15a) et de l'information de véhicule (15b) ; et
la première unité d'arbitrage (29) est configurée pour réaliser un arbitrage sur la base de l'information obtenue par le jumeau numérique.
